Europäisches Patentamt

European Patent Office

Office européen des brevets

(11) Publication number: **0 295 846**
**A1**

## (12) EUROPEAN PATENT APPLICATION

(21) Application number: 88305371.2

(22) Date of filing: 13.06.88

(51) Int. Cl.⁴: **B01D 45/12** , **B04C 5/06**

(30) Priority: 15.06.87 GB 8713921

(43) Date of publication of application:
**21.12.88 Bulletin 88/51**

(84) Designated Contracting States:
**AT BE CH DE ES FR GB GR IT LI LU NL SE**

(71) Applicant: **RICHARD MOZLEY LIMITED**
**Cardrew**
**Redruth Cornwall TR15 1SS(GB)**

(72) Inventor: **Mozley, Richard Henry**
**8 Wood Lane**
**Falmouth, Cornwall TR11 4RF(GB)**

(74) Representative: **Bryer, Kenneth Robert**
**K.R. Bryer & Co. 1 Strangways Villas**
**Truro Cornwall TR1 2PA(GB)**

(54) **Apparatus for separating solid or liquid particles from a gas stream.**

(57) Apparatus for separating solid or liquid particles from a gas stream has an inlet guide duct (11), a conically tapering cyclone body (14) within the inlet guide duct (11) and orientated with its narrow end (25) towards the inlet end of the guide duct (11) with one or a plurality of flow-directing guide vanes (17) being positioned within the guide duct (11) to cause the gas stream therein to adopt a rotating motion about an axis parallel to the general direction of flow; flow-reversing means (19) are positioned at the downstream end of the inlet guide duct (11) to direct the gas stream into the wider, inlet end (15) of the cyclone body (14) from which solid or liquid particles separated within the cyclone are withdrawn at the narrow end (25) via a collection chamber (26) and discharge duct (29) sealed from the inlet guide duct (11).

FIG 1

# APPARATUS FOR SEPARATING SOLID OR LIQUID PARTICLES FROM A GAS STREAM

## Technical Field:

The present invention relates generally to apparatus for separating solid or liquid particles from a gas stream, and is particularly directed to the problem of separating dust from air.

The term "dust" will be understood hereinafter to refer to solid particles, generally the result of mechanical disintegration of matter, and having a size greater than 1 um.

The separation of dust from air or other gas is important in a wide range of applications, particularly where air-pollution control is important, such as in the removal of dust or fly-ash from the flue gases of power stations, and also at the air intake of internal combustion engines to prevent unnecessary abrasion or the inspiration of impurities which could result in unsatisfactory operation of the machinery. Removal of droplets dispersed in the gas stream, for example, at the outlet of an oil-sealed compressor, may also be required for the purpose of conserving the oil and avoiding air pollution.

## The Prior Art:

Various different techniques for separating particles (either solid or liquid) from gas have been used in the past. In the main, particles having a size greater than 100 um can be collected gravitationally, whereas finer particles, in the region of 1-100 um are usually collected by means of a filter. Filters, however, have the disadvantage that they are not entirely secure, and can allow the passage of particle-laden gas in the event of a rupture, or alternatively may severely restrict the flow of gas when they become clogged. For this reason frequent maintenance, either to remove accretions of collected particles, or to substitute a contaminated filter for a clean one, has to be performed on a regular basis. Failure to maintain filters in an optimum working condition can result in a severely restricted efficiency or performance of the machinery served thereby.

## Technical Problem:

Static cyclones have, in the past, been used for separating particles from gas, and known cyclones are usually operated with a vertical axis effectively to act as an increased-gravity settling chamber, the centrifugal acceleration of the particles in the cyclone replacing normal gravitational forces. Cyclones frequently operate in the region of 2500 g in small light resistant units, but are not found to be very effective for particles less than 2 to 3 um and offer only a low efficiency for particles less than 5 um. However, it has been found that the majority of airborne dust lies in a range greater than 5 um and the present invention is based on the technical problem of providing a dust separator, incorporating a cyclone, which shall be small in size, cheap to manufacture and which needs less maintenance than known apparatus for separating airborne dust from the main gas stream.

## Disclosure of the invention:

According to one aspect of the present invention, therefore, apparatus for separating solid or liquid particles from a gas stream comprises an inlet guide duct, a conically tapering cyclone body within the inlet guide duct and oriented with its narrow end at the upstream end of the inlet guide duct, one or a plurality of flow-directing guide vanes for causing the gas stream in the inlet guide duct to adopt a rotating motion about an axis parallel to the general direction of flow, and means for reversing the axial component of motion of the stream to direct it from the inlet guide duct into the wide end of the cyclone body.

As is known, the flow path of gas through a cyclone body is a spiral from the wide end of the cyclone around the inside surface of the guide formed by the cyclone body to a point near the narrow end where the direction of flow reverses and the gas follows an almost helical path out through the central core of the cyclone, leaving this at the wide end. Entrained particles, because of their greater mass, are constrained to follow only the first spiral part of the path and therefore collect at the narrow end of the cyclone body from which they can be removed either continuously by means of a suitable duct, or in batches if a suitable container is provided for their collection.

In a preferred embodiment of the invention the means for reversing the axial component of motion of the gas stream comprises an annular part-toroidal guide surface. This guide surface may be formed as a channel in a solid member, or may be formed from a suitable pressing attached to the inlet guide duct itself. This latter may, and indeed preferably has, a circular cross-section which is constant throughout its length. Other cross-sectional configurations are possible, however, to suit specific requirements.

In a preferred embodiment of the invention the flow-directing guide vanes for causing the gas stream in the inlet duct to adopt a rotating motion about the axis of the duct are located between the inlet guide duct itself and a part of the cyclone body adjacent the wider end thereof. This part of the cyclone body may be formed as a parallel-sided cylindrical portion at the wider end of the cyclone body, and the flow-directing guide vanes preferably project radially from this parallel-sided cylindrical portion.

The narrow end of the cyclone body may be provided with a particle collector sealed from the incoming gas stream within the inlet guide duct. Indeed, the gas stream within the inlet guide duct may be bled off, in part, through a bypass having a venturi communicating with the particle collector chamber or duct, acting to cause a depression in this so as to withdraw the particles therefrom as they collect from the cyclone. In such a case the particle collector is preferably provided with an outlet conveyor duct which traverses the inlet guide duct and is sealed therefrom.

In the preferred embodiment of the invention the means for reversing the axial component of motion of the incoming gas stream at the entrance to the cyclone body preferably has a parallel-sided radially inner extension projecting from the mouth of the cyclone body towards the narrow end thereof, acting as a so-called "vortex-finder" to separate the incoming and outflowing gas stream at the wide end of the cyclone.

It is preferred, but not essential, that the outlet guide for clean or purged gas extends substantially parallel to the axis of the inlet guide duct, and this makes the apparatus of the invention particularly suitable for fitting in an air or gas flow line, such as the inlet duct to an air-consuming machine such as an internal combustion engine, or the exhaust air duct of a machine such as an oil-sealed compressor. In each case the apparatus of the present invention offers the considerable advantage over conventional filter systems of requiring no regular maintenance such as is required by a filter to remove the clogged filter element to be replaced with a new element or to be cleaned using any of the filter-cleaning techniques known in the art, such as backwash cleaning. In all such cases, the apparatus must be out of commission whilst the filters are cleaned, or replaced whilst in the case of the gas cleaner of the present invention no such down time is required.

The above-mentioned outlet guide from the apparatus of the invention may be a duct having a divergent interior wall and, preferably, an at least approximately circular cross-section matching that of the inlet guide duct.

It has been found that an appropriate cone angle for the cyclone body is in the region of 10° for the separation of dust particles in the range of 10 um to 100 um from an air stream.

The radially outer surface of the cylindrical "vortex-finder" guide extending axially of the flow reversal guide at the entrance to the cyclone body at the wider end thereof may be further provided with subsidiary circulation vanes in order to increase the circumferential component of motion of the gas entering the cyclone body.

The present invention thus provides apparatus for separating particles from a gas stream which can operate continuously and, particularly in embodiments where the dust collector at the narrow end of the cyclone body is connected to a low pressure or vacuum region such as a venturi, the apparatus can be made self cleaning by positioning the venturi at a point in the flow of gas where the dust burden is not damaging. This can be achieved, for example, in many circumstances merely by positioning the venturi close to, but outside, the region of the incoming gas stream, or by providing a bypass duct to remove a certain/proportion of the incoming gas stream for this purpose.

One embodiment of the present invention will now be more particularly described by way of example, with reference to the accompanying drawings, in which:

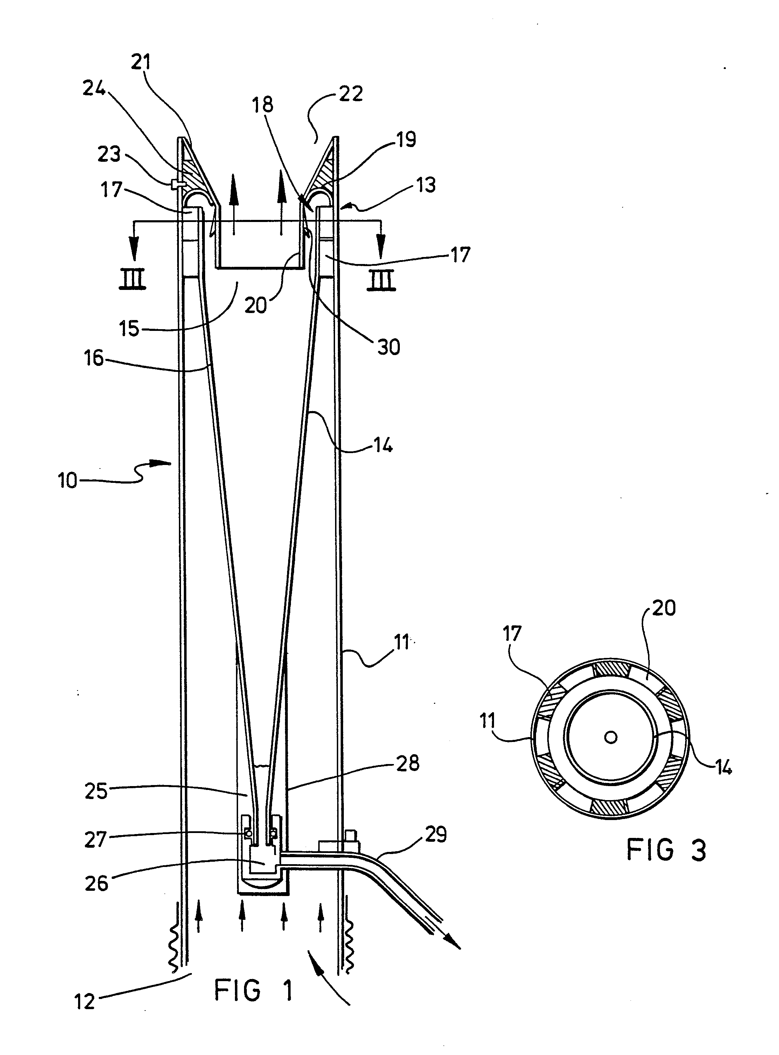

Figure 1 is an axial sectional view of an embodiment formed as an air cleaner;

Figure 2 is a perspective view, in schematic form, illustrating the embodiment of Figure 1; and

Figure 3 is a cross-section taken on the line III-III of Figure 1.

Referring now to the drawings, the apparatus illustrated comprises an air cleaner suitable for fitting at the inlet to an air-consuming machine such as an internal combustion engine, or an exhaust air cleaner which may be fitted at the outlet of a machine such as an oil sealed compressor which generates a stream of air carrying particles of the sealing oil separated from the main body thereof during operation of the compressor.

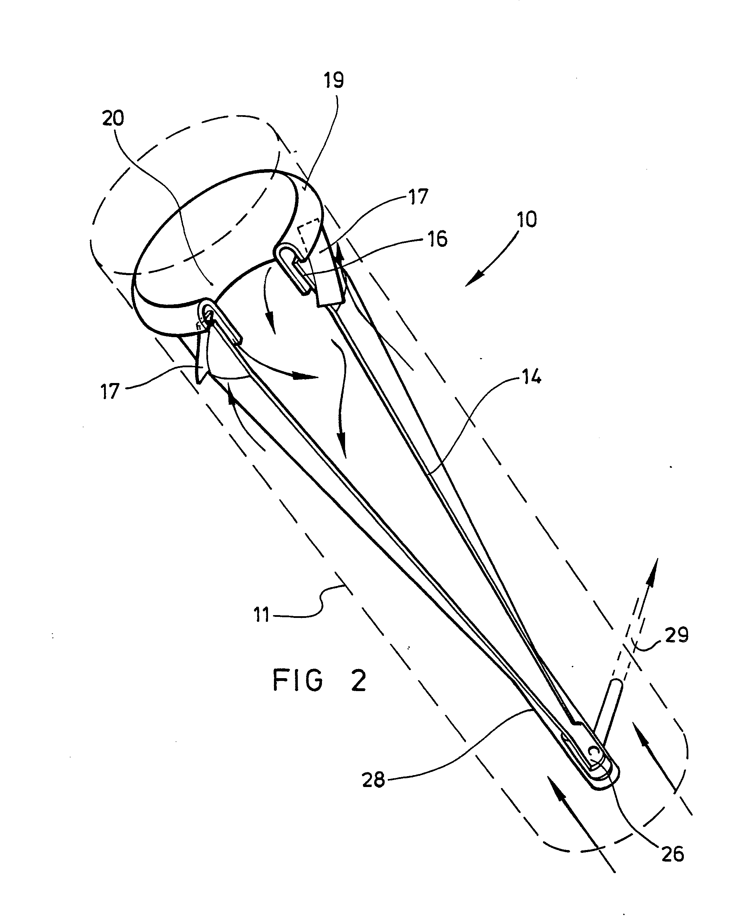

The apparatus illustrated comprises a generally cylindrical inlet guide duct 11 having an entrance end 12 and being of substantially constant cross-section throughout its length. At an outlet end 13 of the duct 11 there is fitted a cyclone body generally indicated 14, comprising a conically tapering main body portion with an entrance mouth 15 joined to a cylindrical cyclone inlet guide sleeve 16 which is held concentrically within the inlet guide duct 11 by a plurality of guide vanes 17 which, as can be seen in Figure 2, are inclined to the general axis of the cylindrical guide duct 11 such that air or other gas flowing along the duct 11 from the inlet end 12 towards the outlet end 13 is caused to adopt a circumferential component of motion around the interior of the guide duct.

The downstream end of the cylindrical cyclone inlet portion 16 is identified with the reference numeral 18, and in axial register with this end there is provided an annular semi-toroidal guide surface 19 which is tangential to the inner surface of the cylindrical inlet guide 11 at its radially outer periphery and attached at its inner periphery to a cylindrical vortex-finder 20 which extends axially from the point of connection to the annular guide 19 towards the inlet mouth 12 of the inlet guide duct 11 for a distance slightly less than the axial length of the cylindrical portion 16 of the cyclone body 14.

A conically tapering, divergent guide surface 21 joins the upstream end of the vortex-finder 20 to the outlet end of the guide duct 11 to define an outlet mouth 22 for clean air from the apparatus 10. The annular space between the conical outlet guide 21, the semi-toroidal annular guide surface 19 and the downstream end of the cylindrical guide 11 may be hollow, these components being fabricated from sheet steel, or may be filled with an appropriate solid material. The manner of manufacture of these guides is not critical to the invention, and has been shown in the drawings as an assembly of prefabricated pressed sheet metal. Alternatively, however, the conically tapering guide surface 21 and the semi-toroidal annular guide 19 may be opposite faces of a solid body which could be fitted to or joined to the end of the cylindrical guide 11. In the embodiment illustrated, a locking screw 23 is provided for securing a solid filling 24 in the annular interspace between the conical outlet guide 21 and the adjacent portion of the cylindrical duct 11.

The cyclone body 14 has a cone angle in the region of 10°, and at its narrow end 25 is provided with a dust collection chamber 26 sealed by a packing 27 within an enclosure 28, the side walls of which extend over about one-third of the length of the conical cyclone body 14 and has a cylindrical outer surface. Passing through the casing 28 and in communication with the interior dust collecting chamber 26 is a transverse duct 29 leading to a dust disposal discharge (not shown).

In use of the apparatus illustrated, air or other gas is introduced through the inlet opening 12 into the cylindrical inlet guide 11 and passes axially along the interior of this, gradually increasing in speed as the flow cross-section decreases with the increase in diameter of the conical cyclone body 14 towards the downstream end of the inlet guide 11. As mentioned above, the inclined guides 17 cause the incoming air to adopt a peripheral component of motion as it approaches the downstream end of the inlet guide 11, and this circumferentially flowing air is then reversed through 180° by the semi-toroidal annular guide 19 so that it enters the entrance mouth 18 to the cylindrical portion 16 of the cyclone body 14 with a substantially circumferential motion, which can be further increased by the provision of small inclined vanes 30 on the radially outer surface of the cylindrical vortex-finder guide 20. As the air flows down the inside surface of the conically tapering cyclone body 14 it accelerates centrifugally in the known way and entrained dust particles are driven by the centrifugal acceleration towards the cyclone wall whilst the entraining air itself follows a double helix path first down the outer portion of the volume defined by the cyclone body 14 and then reversing its direction flowing back from the narrow end towards the wide end where it passes through the cylindrical vortex-finder 20 into the outlet guide 21 and thence onwards to its eventual destination leaving behind the originally entrained particles to collect in the collection chamber 26 from where they are withdrawn through the duct 29. The duct 29 itself may be maintained under a slight depression in order to encourage the removal of collected particles from the chamber 26, although this will also allow some of the entraining air within the interior of the cyclone to escape through the narrow end reducing the total throughput of air through the apparatus.

As will be appreciated, the overall dimensions of the separator apparatus of the invention are very restricted, making it possible for the apparatus to be used in a wide range of applications where previously filters have been employed without inconvenience from its bulk. Indeed, it is envisaged that air cleaner apparatus formed in accordance with the principles of the present invention may be designed with dimensions no greater than those of conventional filters now employed for the same purpose. For example, the air cleaner filters used in the inlet ducts of internal combustion engines for motor vehicles occupy a not inconsiderable volume within the engine compartment and may be replaced with a cyclone dust separator such as that illustrated in the drawings without difficulty.

The apparatus of the present invention also has the advantage that it can be used to separate liquid droplets or particles from entraining air in the same way as solid particles without risk of clogging such as would occur if a filter were used for this purpose.

## Claims

1. Apparatus for separating solid or liquid particles from a gas stream, characterised in that it comprises an inlet guide duct (11), a conically tapering cyclone body (14) within the inlet guide duct (11) and oriented with its narrow end (25) at the upstream end of the guide duct (11), one or a plurality of flow directing guide vanes (17) for causing the gas stream in the inlet guide duct to adopt a rotating motion about an axis parallel to the general direction of flow, and means (19) for reversing the axial component of motion of the stream to direct it from the inlet guide duct (11) into the wide end (15) of the cyclone body.

2. Apparatus according to Claim 1, characterised in that the means (19) for reversing the axial component of motion of the gas stream comprises an annular, part-toroidal guide surface (19).

3. Apparatus according to Claim 1 or Claim 2, characterised in that the flow-directing guide vanes (17) for causing the gas streams in the inlet guide duct (11) to adopt a rotating motion about the axis of the duct (11) are located between the inlet guide duct (11) itself and a part (20) of the cyclone body adjacent the wide end (15) thereof.

4. Apparatus according to Claim 3, characterised in that the cyclone body (14) has a parallel-sided cylindrical portion (20) at the wide end (15) thereof and the flow-directing guide vanes (17) project radially from this parallel-sided cylindrical portion (20).

5. Apparatus according to any preceding Claim, characterised in that the narrow end (25) of the cyclone body (14) is provided with a particle collector (26) sealed from the incoming gas stream within the inlet guide duct (11).

6. Apparatus according to Claim 5, characterised in that the particle collector (26) has an outlet conveyor duct (29) which traverses the inlet guide duct (11) and is sealed therefrom.

7. Apparatus according to any preceding Claim, characterised in that the means (19) for reversing the axial component of motion of the incoming gas stream at the entrance (15) to the cyclone body (14) has a parallel-sided radially inner extension (20) projecting from the entrance (15) to the cyclone body (14) towards the narrow end (25) thereof, acting as a so-called "vortex-finder" to separate the incoming and outflowing gas streams at the wide end (15) of the cyclone.

8. Apparatus according to any preceding Claim, characterised in that an outlet guide (21, 22) for purged gas extends substantially parallel to the axis of the inlet guide duct (11).

9. Apparatus according to Claim 8, characterised in that the outlet guide (21, 22) is a duct having a divergent interior wall (21) and an at least approximately circular cross-section.

10. Apparatus according to any preceding Claim, characterised in that the cone angle of the cyclone body (14) is in the region of 10°.

11. Apparatus according to any of Claims 1 to 10, characterised in that there are provided subsidiary circulation vanes on the radially outer surface of the cylindrical "vortex-finder" guide (20) extending axially of the flow-reversal guide (19) at the entrance (15) to the cyclone body (14) at the wide end thereof.

12. Apparatus for separating solid or liquid particles from gas, characterised in that it comprises apparatus according to any preceding Claim connected to means for generating a low pressure or vacuum region, in communication with the dust collector discharge pipe (29).

FIG 1

FIG 3

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 600 815 (K. KAEWEL)<br>* Whole document *<br>--- | 1-8 | B 01 D 45/12<br>B 04 C 5/06 |
| X | DE-C- 635 914 (H. SPELLEKEN )<br>* Whole document *<br>--- | 1-8,11 | |
| A | DE-C- 964 413 (O. WIRMER)<br>* Whole document *<br>--- | 1,3,4 | |
| A | FR-A-1 306 932 (METALLGESELLSCHAFT)<br>----- | | |

TECHNICAL FIELDS
SEARCHED (Int. Cl.4)

B 01 D 45/00
B 04 C 5/00
B 04 C 7/00
F 23 J 3/00
F 02 M 35/00

The present search report has been drawn up for all claims

| Place of search | Date of completion of the search | Examiner |
|---|---|---|
| THE HAGUE | 25-07-1988 | POLESAK, H.F. |